Europäisches Patentamt

**European Patent Office**

**Office européen des brevets**

(11) Publication number: **0 227 590**
A1

# (12) EUROPEAN PATENT APPLICATION

(21) Application number: **86810004.1**

(22) Date of filing: **09.01.86**

(51) Int. Cl.⁴: **A 61 C 5/12**

(30) Priority: **19.12.85 CH 5405/85**

(43) Date of publication of application:
**01.07.87 Bulletin 87/27**

(84) Designated Contracting States:
**AT BE DE FR GB IT LU NL SE**

(71) Applicant: **Hawe-Neos Dental Dr. H. von Weissenfluh S.A.**

**CH-6925 Gentilino(CH)**

(72) Inventor: **von Weissenfluh, Beat**
**Casa Zarament**
**CH-6925 Gentilino(CH)**

(74) Representative: **Baggiolini, Raimondo et al,**
**Racheli & Fiammenghi Via San Gottardo 15**
**CH-6900 Lugano(CH)**

(54) **Improved matrix holder for dentistry.**

(57) The matrix holder, which can be operated by hand without the use of pliers, comprises a slide (2) fixed to a clamp (3, 4) of two end matrix arms (1', 1") so by causing slide (2) to slide along the arms toward loop (1''') of the matrix, the loop is closely tightened around the tooth to be filled.

The clamp consists of two plates (3, 4) partially penetrating into inside space (6) of the sleeve. The two plates are able to be mutually separated to allow introduction of the two matrix arms (1', 1") which have been brought close together when they (the plates) project for the most part from the sleeve and to close by being wedged in space (6) of the sleeve, when the slide, made to slide gradually toward the tooth, tightens the matrix loop around the tooth.

Fig 3a

Fig.3b

EP 0 227 590 A1

Croydon Printing Company Ltd.

Improved matrix holder for dentistry

This invention has as it object an improved matrix holder for dentistry, which makes possible the immediate, perfect fitting of the matrix around the tooth to the filled, without having to resort to pliers or other tools.

There is known (see Swiss patent application No. 2451/85-6, filed on June 11, 1985, by the same applicant) a matrix holder for dentistry suitable for tightening the matrix, consisting of a thin plastic strip, permeable to light rays in the visible spectrum which cause hardening by polymerization of the materials for filling teeth, a strip bent like a ring and ending in two long parallel arms that join to receive the matrix holder.

This latter comprises a slide holding a clamp of the two end arms of the matrix so that by causing the slide to slide along the arms, toward the loop of the matrix, the loop is tightly closed around the tooth.

For perfect fitting of the matrix to the tooth, it is necessary, in the known matrix holder mentioned above, to resort to the usual pliers used by the dentist, which, by acting on the slide, places it in the correct position.

All this involves a certain loss of time and the constant use of both hands by the dentist.

The matrix holder according to this invention eliminates these drawbacks.

It is characterized in that said slide comprises a sleeve whose clamp is slipped onto the two matrix arms that have been brought together, and said clamp consists of two plates fixed to the sleeve and partially penetrating the inside space of the sleeve itself, plates that can be mutually separated to allow the introduction of the two matrix arms, which have been brought together, when they (the plates) project in great part from said space and to close by being wedged in the matrix space when the slide, made to slide by hand toward the tooth, tightens the matrix loop around the tooth; the material of matrix and of the two plates being selected, in comparison with that of matrix, to allow sliding toward the tooth without appreciable friction and to prevent the spontaneous return of the slide when the wedging of the plates has taken place.

The accompanying drawings show a preferred nonlimiting, nonbinding embodiment of the matrix holder in question.

-- Fig. 1a shows the matrix holder with open clamp.

-- Fig. 1b shows the matrix.

-- Fig. 2 shows the top plan view of fig. 1a.

-- Fig. 3a shows the side view of fig. 1a.

-- Fig. 3b shows the side view of the matrix according to fig. 1b.

-- Fig. 4 shows the cross section of the sleeve with the clamp open; the two plates of the clamp being connected together at the vertex.

-- Fig. 5 shows the same section with the clamp closed.

-- Fig. 6 shows the side view of the clamp of fig. 4 and 5.

-- Fig. 7a to 7h show in perspective the various phases for slipping on, tightening and loosening the matrix.

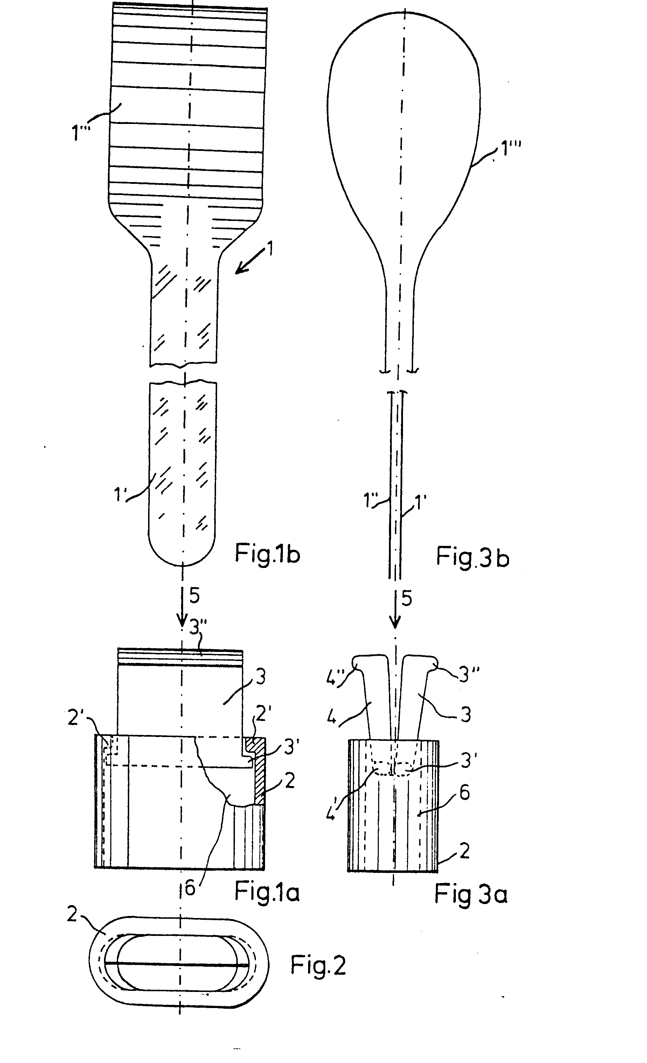

Matrix 1 (fig. 1b and 3b) is formed by a thin strip that is transparent, i.e., permeable to light rays or those that can cause polymerization of the filling resin.

The strip is wider in its central zone in which it forms a loop 1"' that is slipped around the tooth to be filled.

The loop ends in two arms 1', 1" on which is slipped matrix holder 2-3-4 (fig. 1a, 3a) according to the invention.

This matrix holder consists of sleeve 2 and clamp formed by two wedge-shaped plates 3, 4. The plates are fixed to sleeve 3', 4' by being retained by projections 2' of the sleeve itself and orthogonal projections 3", 4" that prevent the plates from slipping out of opening 6 of sleeve 2.

The entire unit is preferably made by molding of a synthetic resin.

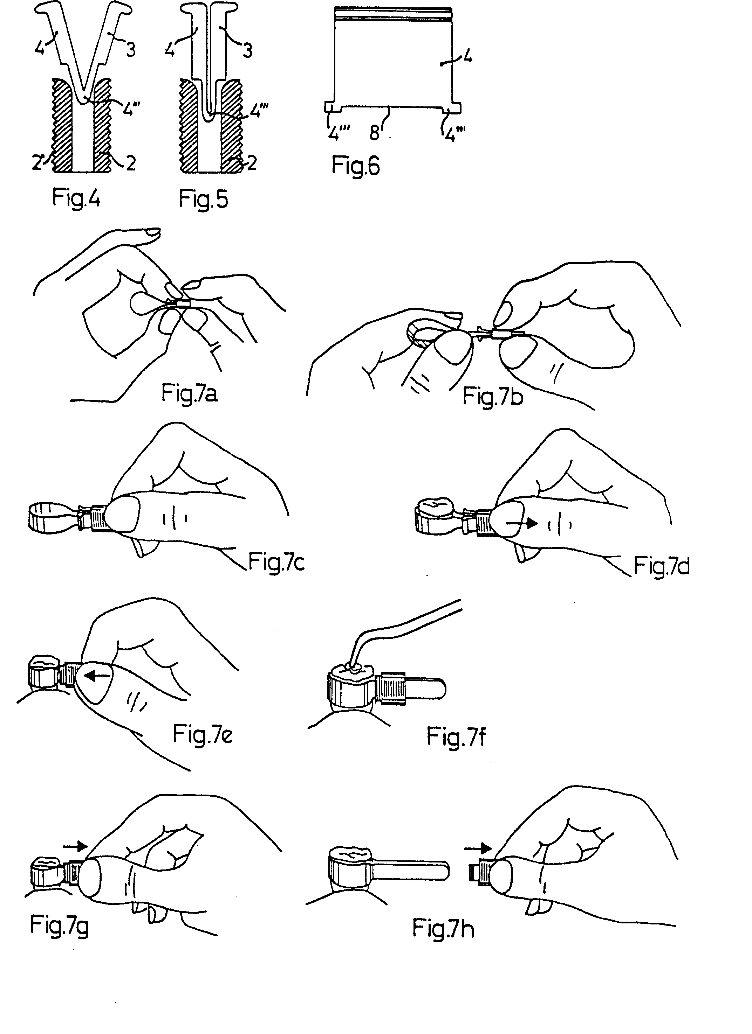

Figures 4, 5, 6 show a variant according to which the clamp is formed by two plates 3,4, connected together at vertex 4"' to leave opening 8 for passage of the two matrix arms 1', 1" that have been brought together. The functioning is as follows: with the ends of the matrix introduced into clamp 3, 4, the sleeve is made to slide on the two arms 1', 1", which have been brought together (fig. 7a), toward loop 1"' (fig. 7b) so that the two plates 3, 4 are closed on the arms and gradually tighten loop 1"' against the tooth (fig. 7c, 7d) like a slip knot.

This operation is performed without having to resort to the present dentist's pliers for gripping the slide or other tools, but simply by

- 4 -

0227590

using the fingers and therefore quickly and with extreme ease, obtaining a perfect adherence of loop 1"' of matrix 1 around the tooth.

To prevent clamp 3, 4 from closing too tightly on arms 1', 1" before it has reached loop 1"' and to make it close the loop with complete security, always according to the invention, the material that makes up the matrix will be different from that making up the two plates 3, 4 so as to exhibit a coefficient of friction contained with set limits.

It is provided that the outside surface of the two plates 3, 4 can exhibit serrations or knurling which promote locking of the plates themselves in space 6 of sleeve 2 when said plates are wedged in it, keeping the loop of the matrix tight against the tooth that is to be filled.

In this case, to loosen plates 3, 4 it suffices to press the outside surface of sleeve 2 with two fingers, deforming it to allow the escape of said plates.

Outside surface 2" of sleeve 2 can also be knurled (fig. 4) to promote gripping with the fingers.

The shape of the various parts making up the matrix holder in question can vary without going outside the scope of protection of the invention.

Claims

0227590

1. Improved matrix holder for dentistry comprising a slide holding a clamp of two end arms of a matrix so that, by causing said slide to slide along the arms toward the matrix loop, the loop is closely tightened around the tooth to be filled, characterized in that said slide comprises a sleeve (2) whose clamp is slipped onto the two arms (1', 1") of matrix (1) which have been brought together, and said clamp consists of two plates (3, 4) fixed to sleeve (2', 3", 4") and partially penetrating inside space (6) of the sleeve itself,, plates that can be mutually parted to allow the introduction of the two matrix arms (1', 1"), which have been brought together, when they (the plates) project in great part from said space (fig. 3 and 4) and to close by being wedged in the matrix space when the slide, made to slide by hand toward the tooth, tightens the matrix loop around the tooth; the material of matrix (2) and of the two plates (3, 4) being selected, in comparison with that of matrix (1), to allow sliding toward the tooth without appreciable friction and to prevent the spontaneous return of slide when the wedging of the plates has taken place.

2. Matrix holder according to claim 1, wherein the two plates (3, 4) are separate, i.e., they are not connected.

3. Matrix holder according to claim 1, wherein the two plates (3, 4) are connected together at one end (4"'-4"' fig. 6).

4. Matrix holder according to claims 1, 2, 3, wherein the two plates (3, 4) are wedge-shaped and exhibit first projections (3', 4') which join retaining projections (2') of the sleeve to prevent the plates from coming completely out of space (6) of sleeve (2) and second projections (3", 4") in the orthogonal direction with respect to first projections (3', 4') to avoid total sinking of the plates in said space (6).

5. Matrix holder according to claim 1, wherein the matrix is of elastomer and the plates are also of elastomer but of a nature different from that of the matrix, to guarantee sliding.

6. Matrix holder according to claims 1, 2, 3, wherein the outside surface of sleeve (2) is knurled or serrated.

Fig.1b

Fig.3b

Fig.1a

Fig 3a

Fig.2

2/2

0227590

Fig.4  Fig.5  Fig.6

Fig.7a

Fig.7b

Fig.7c

Fig.7d

Fig.7e

Fig.7f

Fig.7g

Fig.7h

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | US-A-3 383 769 (DAVIS) <br> * column 2, line 51 - column 3, line 31; figures 1-7 * | 1 | A 61 C 5/12 |
| A | DE-U-6 927 226 (NEWMAN) <br> * page 3, lines 9-18; figures 1-7 * | 1,6 | |
| A | US-A-3 812 585 (BALSON) <br> * column 2, line 53 - column 3, line 22; figures 1-7 * | 1 | |
| A | US-A-3 829 975 (BALSON) <br> * column 2, lines 4-27; figure 1 * | 1 | |
| A | US-A-3 795 981 (FRANKLIN et al.) <br> * figures 1, 2 * | 1 | TECHNICAL FIELDS SEARCHED (Int Cl 4) <br><br> A 61 C 5/00 |

The present search report has been drawn up for all claims

| Place of search | Date of completion of the search | Examiner |
|---|---|---|
| BERLIN | 11-03-1987 | SIMON J J P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82